# FASCICULE DE BREVET EUROPEEN

(11) **EP 1 016 045 B1**
(45) Date de publication et mention de la délivrance du brevet: **29.03.2006**
(21) Numéro de dépôt: 98924361.3
(22) Date de dépôt: 30.04.1998
(51) Int. Cl.: G07F 7/02

(54) **CARTE A PUCE MUNIE D'UN DISPOSITIF DE COMPTAGE**
CHIPKARTE MIT ZÄHLVORRICHTUNG
CHIP CARD EQUIPPED WITH A COUNTER DEVICE

(30) Priorité: 02.05.1997 FR 9705475
(43) Date de publication de la demande: 05.07.2000
(73) Titulaire: GEMPLUS, 13881 Gémenos Cédex (FR)
(72) Inventeur: COOREMAN, Pascal, F-13008 Marseille (FR); KIRIK, Jean-Paul, Montréal, Québec H2J 1K9 (CA)
(86) Numéro de dépôt international: PCT/FR1998/000881
(87) Numéro de publication internationale: WO 1998/050893

(56) Documents cités:
- EP-A- 0 157 416
- EP-A- 0 640 945
- EP-A- 0 658 862
- EP-A- 0 736 849
- EP-A- 0 775 990
- WO-A-90/15382
- WO-A-95/21428
- US-A- 5 380 991

## Description

La présente invention a pour objet une carte à puce munie d'un dispositif de comptage perfectionné. Elle vise à faciliter l'utilisation des cartes à puce, ou plus généralement des objets portables à puce, dans des domaines de plus en plus divers, en rendant cette utilisation à la fois plus puissante et plus rapide.

Dans le domaine des objets portables à puce, les puces sont munies de différents compteurs. On connaît de manière classique des compteurs d'unités, représentatives d'unités de consommation possibles, voire de monnaie. On connaît également des compteurs de gratifications qui comptent des points de fidélisation octroyés par un prestataire à un utilisateur. Cet octroi peut être au prorata de la consommation d'un service par l'utilisateur, de la venue de l'utilisateur dans un établissement, chez un commerçant, ou même un comptage de ses passages à certains endroits. Par exemple*,* US-A-5 380 991 décrit une carte à puce munie de différents compteurs.

Les compteurs peuvent être réalisés sous diverses formes. Il peuvent être des compteurs matériels ou des compteurs logiciels. Un compteur matériel est un compteur dans lequel, à la manière d'un boulier, le passage du compteur d'un état initial à un état final emprunte, pour le compteur, des états intermédiaires représentatifs de valeurs intermédiaires entre cette valeur initiale et cette valeur finale. Un compteur logiciel est constitué principalement par un enregistrement, une valeur, et par un algorithme mis en oeuvre par un microprocesseur. Le principe de la modification d'un compteur logiciel consiste à aller lire une donnée de valeur en lisant l'enregistrement, à modifier la donnée qui résulte de cette lecture en fonction de l'algorithme (en général il s'agit d'une addition, ou d'une autre opération mathématique), et à réécrire à l'endroit de l'enregistrement la nouvelle valeur calculée. L'invention aura principalement pour but les compteurs logiciels encore qu'elle serait aussi applicable aux compteurs matériels.

Au moment du comptage, pour des raisons de sécurité, l'état dû compteur est transmis par la carte à puce à un lecteur de carte à puce qui lit cette carte. Les programmes du lecteur mettent en oeuvre l'algorithme et provoquent à l'issue l'enregistrement de la nouvelle valeur dans la mémoire de la puce de la carte, Cette solution présence beaucoup de souplesse: les lecteurs sont munis d'un système d'exploitation propre à leur faire assurer ces fonctions.

Cependant, cette manière de faire présente l'inconvénient que la transaction est lente, elle nécessite de nombreuses vérifications entre l'émetteur. (le lecteur) et le récepteur (la carte à puce). Dans le domaine dit de la carte sans contact, où l'énergie électrique est fournie à la carte par une émission radioélectrique, ces nombreux échanges en plus d'être lents, sont particulièrement difficiles à réaliser.

Dans l'invention, on remédie à ce problème de limitation du nombre des échanges en munissant la carte à puce d'un enregistrement de règles qui associent des compteurs à des instructions de modification de ces compteurs. De préférence on munit la carte à puce d'une mémoire qui contient ces instructions de modification elles-mêmes, et d'un microprocesseur qui les met en oeuvre.

L'invention a donc pour objet une carte à puce selon la revendication 1 et un procédé de comptage selon la revendication 9 pour les Etats contractants désignés autres que DE, FR et GB.

Le document EP-A-0775990 est état de la technique au sens de l'article 54(3) CBE pour les Etats contractants DE, FR et GB. Cette demande antérieure divulgue une carte à puce munie dans sa puce d'un dispositif de comptage comportant au moins un compteur modifiable à l'aide d'instructions de modification des compteurs et d'un microprocesseur. Le dispositif de comptage comporte un fichier de règles dont chaque enregistrement comporte au moins une fiche d'instruction comportant une zone de désignation (shop number) pour identifier un compteur à mouvementer, une zone d'instruction (contents of service) pour identifier l'instruction de modification du compteur à mouvementer et au moins une zone de variable pour contenir une variable sur laquelle s'applique l'instruction de modification du compteur à mouvementer.

Pour les Etats contractants DE, FR et GB l'invention a pour objet une carte à puce selon la revendication 1 et un procédé de comptage selon la revendication 8.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- figure 1: une carte à puce munie du dispositif de comptage;
- figures 2 à 4: une représentation détaillée de la structure des fichiers enregistrés dans les dispositifs de comptage;
- figures 6 à 12: les particularités de mise en oeuvre de l'invention dans le cas d'un exemple.

Dans l'invention, on appellera fichier un ensemble d'enregistrements enregistrés en mémoire. On appellera enregistrement, un ensemble de données, associées entre elles à la manière d'une base de données. On appellera fiche, des associations de données d'un enregistrement ayant toutes une même structure, une même syntaxe.

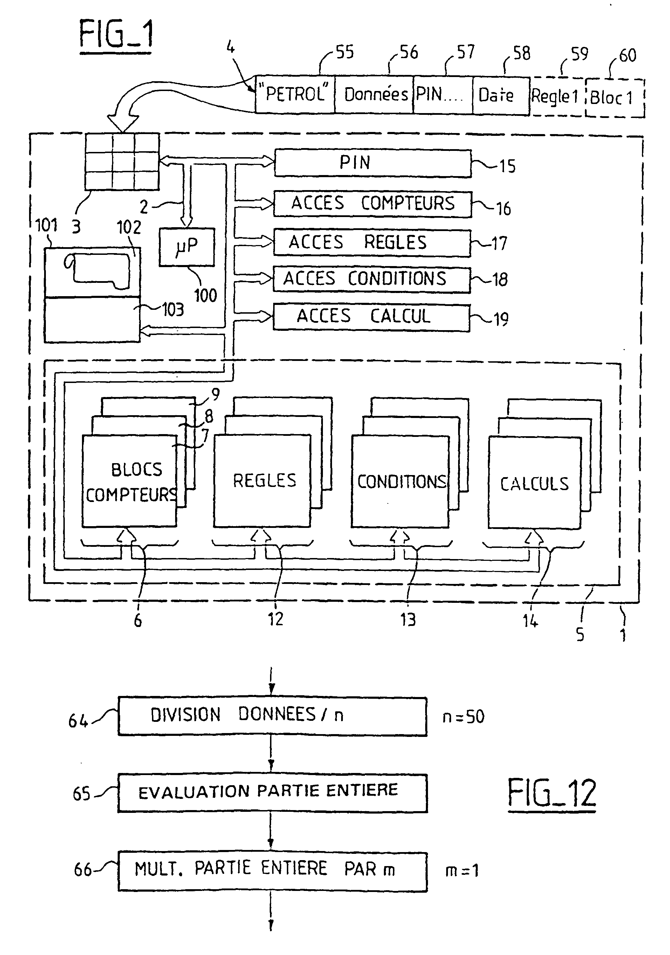

La figure 1 montre une carte à puce 1 munie d'un dispositif de comptage. La carte à puce 1 comporte un microprocesseur 100, un bus 2 de données, d'adresses et de commandes, et des moyens 3 pour entrer en relation avec le monde extérieur. D'une manière schématique, les moyens 3 représentent ici un connecteur qui reçoit un message 4 en provenance d'un lecteur non représenté. La liaison avec le lecteur peut par ailleurs être une liaison électrique, radioélectrique, par infra rouge: elle dépend de la nature de l'interface 3.

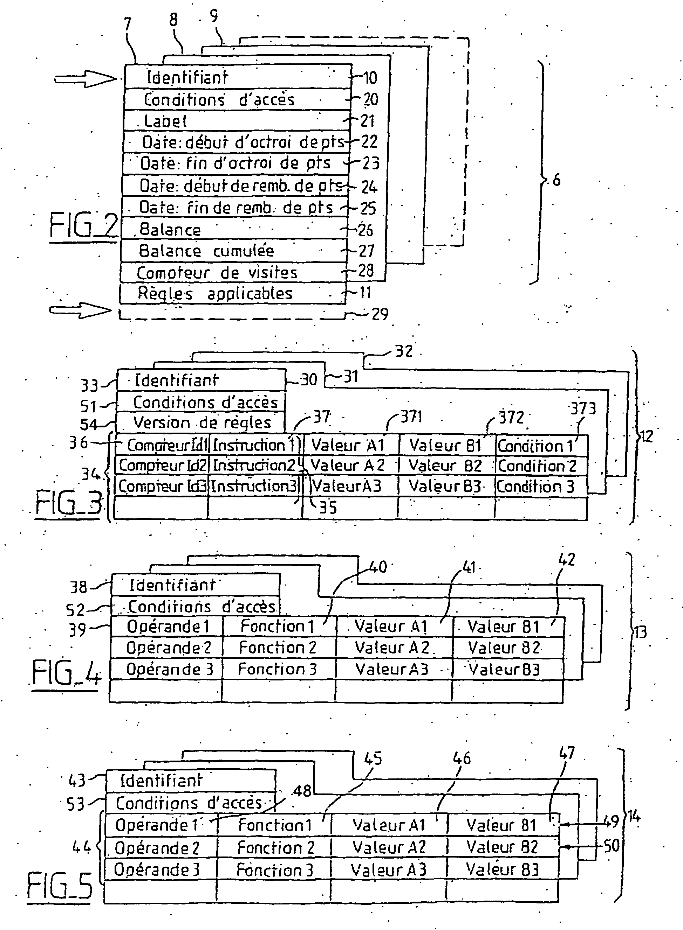

La puce de la carte comporte un dispositif de comptage 5 qui comporte au moins un compteur. On verra par la suite comment est réalisé ce compteur. Figure 2, le dispositif de comptage 5 comporte de préférence un fichier 6 de blocs compteurs. Chacun des enregistrements 7, 8, 9 ou autre, du fichier 6 associe une identification 10 d'un bloc compteur à une liste 11 de règles de modification des compteurs de ce bloc. La figure 2 montre d'une manière détaillée le fichier 6 et l'enregistrement 7. Il peut y avoir plusieurs blocs compteurs dans le fichier 6. On en n'a schématiquement représenté que trois.

L'enregistrement 7 de bloc compteur, ainsi que les autres enregistrements, comportent essentiellement une zone identifiant 10 et une zone règles applicables 11. Les règles de la zone 11 sont utilisables sur le bloc compteur 7. Le but est d'assurer la sécurité du bloc compteur 7 en autorisant l'application des seules règles ainsi désignées.

L'identifiant 10 peut représenter le nom de l'application (type d'utilisation de la carte à puce) qui utilise le bloc compteur. Cet identifiant est généralement communiqué à la carte au moment de la mise en relation avec le lecteur.

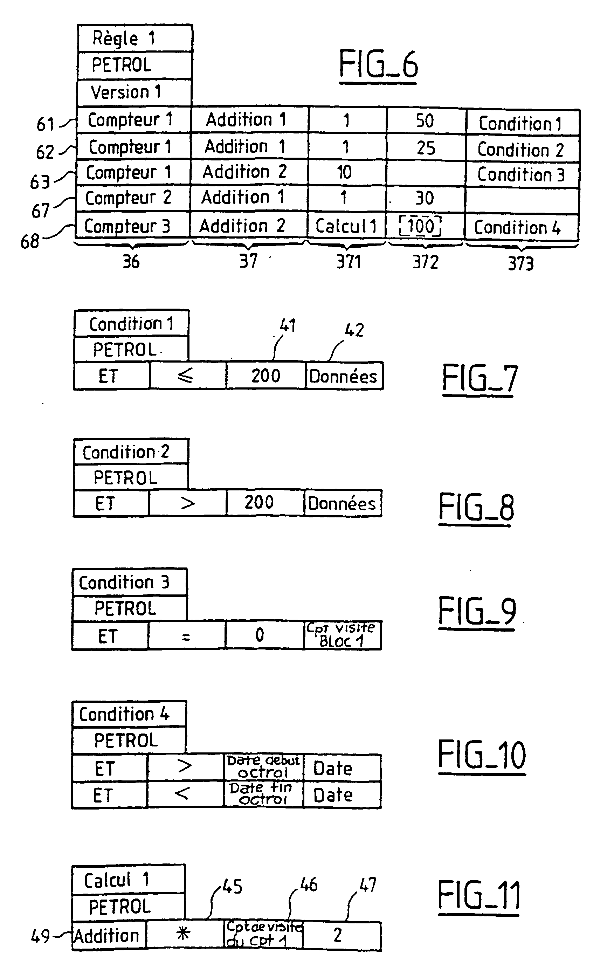

Selon l'invention, la carte 1 comporte en mémoire, un fichier de règles 12 (figure 3). De préférence, elle peut aussi comporter un fichier de conditions 13 (figure 4) et un fichier de calculs 14 (figure 5). La puce comporte également, figure 1, un ensemble de registres 15 à 19 destinés à recevoir des informations notamment des informations de condition d'accès. Les registres 15 à 19 ainsi que les fichiers 6 et 12 à 14 sont aussi reliés au microprocesseur 100 par le bus 2. Les fichiers 6, 12, 13 et 14 sont mémorisés dans ce but dans une mémoire de la puce 1. Cette mémoire est ici confondue avec ces fichiers eux-mêmes dans un souci de simplification de l'explication. Néanmoins, il est possible d'adopter pour cette mémoire, ou pour les mémoires qui contiennent ces fichiers, des structures physiques variées: mémoires non volatiles, mémoires sauvegardées, mémoires différenciées pour chacun des fichiers, ou mémoire unique.

Une mémoire auxiliaire 101 peut par ailleurs contenir une mémoire programme 102 et une mémoire de données 103. Le microprocesseur 100 met en oeuvre l'invention en appliquant des programmes contenus dans la mémoire programme 102 sur des données de la mémoire 103. Une de ces mémoires 102 ou 103, ou les deux, peut être située dans les circuits du lecteur. La mémoire 103, si elle est dans la carte à puce, peut contenir les fichiers 6 et 12 à 14 à moins que ceux-ci ne soient enregistrés dans une autre mémoire de la carte.

L'enregistrement 7 comporte, en plus de la zone 10 et de la zone 11, de préférence, une zone 20 relative à des conditions d'accès et une zone 21 relative à un label du bloc compteur (le nom du bloc compteur). Il peut comporter par exemple aussi quatre zones de date, 22 à 25, mentionnant une date de début d'octroi de points de gratification, une date de fin d'octroi de ces points de gratification, une date de début de remboursement des points, et une date de fin de remboursement des points. Le bloc 7 comporte également la désignation d'un certain nombre de compteurs. Ici une zone 26, appelée balance, comportera l'état réel du compteur de gratifications, une fois qu'on y a additionné et soustrait tous les points. Il peut comporter une balance cumulée 27 représentative du nombre de points reçus dans le bloc compteur 7, sans déduction des remboursements. Il comporte enfin une zone 28 de comptage de visites comptabilisant le nombre de fois où, en pratique, la zone 26 de balance a été mouvementée. Il peut comporter d'autres zones 29 pour d'autres types de comptage.

Le fichier essentiel de l'invention, le fichier 12 des règles, comporte des enregistrements tels que 30 à 32. Chaque enregistrement identifié par une règle, désignée par une zone identifiant 33, comporte une série 34 de fiches associant chacune un compteur à une instruction applicable à ce compteur. Chaque fiche d'un enregistrement du fichier de règles 12 comporte donc une zone 36 de désignation, pour désigner un compteur et une zone 37 d'instruction pour renseigner sur le mode de modification du compteur à mouvementer. L'instruction en zone 37 est généralement une instruction d'addition ou de soustraction. On pourrait néanmoins envisager tout autre opération arithmétique simple ou complexe.

Chaque fiche d'un enregistrement du fichier 12 comporte au moins une zone, de préférence deux zones 371, 372, de variables pour contenir des variables sur lesquelles s'appliquent l'instruction. Ces variables peuvent être des variables de date, des variables numériques. Elles peuvent aussi être des références à des valeurs contenues dans d'autres fichiers. Par exemple, elles peuvent être des adresses d'autres valeurs. Ces adresses peuvent être celles des zones 26, 27 ou 28 du bloc compteur concerné, ou d'un autre bloc. Quand une fiche ne comporte pas d'indication en zone 371 et 372, ou lorsqu'une fiche ne comporte pas de telles zones, celles-ci, représentant les opérandes de l'instruction, sont ou peuvent être implicitement contenues dans le code instruction de l'instruction.

De préférence, les enregistrements du fichier 12 comportent en plus une cinquième zone 373 de condition qui est une zone de référence de condition. Cette zone 373 désigne un enregistrement du fichier 13 de conditions à satisfaire pour autoriser la réalisation de l'instruction.

La figure 4 montre le fichier 13 de conditions. Ce fichier 13 comporte essentiellement, dans chaque enregistrement, une zone identifiant 38 et une liste de fiches de conditions composées. Chaque fiche de condition comporte une zone opérateur 39 montrant comment composer les conditions des différentes fiches d'un enregistrement, une zone fonction 40 pour représenter une condition logique, et au moins deux zones 41 et 42 pour contenir respectivement une valeur de référence de la condition et une valeur à tester par rapport à la valeur de référence selon la condition logique de la zone 40.

D'une manière préférée, la carte 1 de l'invention comporte encore un fichier de calcul 14, figure 5, dont les enregistrements comportent, chacun, une zone identifiant 43 et un ensemble de fiches de calculs 44. Chaque fiche d'enregistrement de calcul comporte une zone de fonction 45 pour représenter une fonction mathématique élémentaire, au moins une zone, de préférence deux zones 46 et 47, pour contenir un ou deux opérandes de cette fonction mathématique élémentaire, et une zone 48 dite opérateur de fiche pour indiquer la manière dont le résultat d'une fiche de calcul 49 doit être pris en compte pour un calcul avec une fiche suivante 50. Le résultat du calcul de l'ensemble des fiches 44 est destiné à remplacer une valeur (371 ou 372) à l'intérieur d'un enregistrement de règle (12), une valeur (41) à l'intérieur d'un enregistrement de condition (13), ou une valeur (46 ou 47) à l'intérieur d'un enregistrement de calcul (14).

Les fichiers 12, 13 et 14 comportent de préférence, comme le fichier 6, dans chaque enregistrement une zone de condition d'accès respectivement 51 à 53. En outre, les enregistrements du fichier 12 comporteront de préférence une zone 54 de version de règles permettant d'identifier le caractère récent de la règle mise en oeuvre.

Les figures 6 à 12 montrent un procédé d'utilisation, arbitraire mais complet, de l'organisation des fichiers 6 , 12, 13 et 14 entre eux.

Comme le montre la figure 6, on a choisi un scénario, Règle 1, correspondant à un enregistrement du fichier 12. Dans ce scénario, dans un programme de fidélité donné, lorsqu'un client se livre à des achats compris entre 0 et 200 Frs, on lui attribue un point de gratification par tranche de 50 Frs d'achat. Pour un client qui achèterait pour plus de 200 Frs, on décide de lui attribuer un point par tranche de 25 Frs d'achat. En outre, s'il s'agit de sa première visite, il reçoit dans son compteur de points de gratification 10 points de bienvenue.

On va supposer que le fournisseur est un fournisseur de carburant qui identifie son application par un code PETROL transmis dans une zone 55 du message 4. On va supposer également que des données, présentes dans une zone 56 du message 4, représentent 180 pour un achat de 180 Frs. Le message 4 comporte également, composé par le propriétaire de la carte à puce sur un clavier du lecteur, une identification 57 de ce propriétaire par son numéro personnel d'identification: PIN (Personnal Identification Number). Le message 4 comporte enfin en zone 58 la date du jour de la transaction, dans la mesure où cette date est utile pour la règle, et où la carte 1 n'est elle-même pas capable de la produire indépendamment. Le message 4 comporte dans une zone 59, la désignation d'une règle particulière applicable "Règle 1", et ou en variante la désignation d'un bloc compteur "Bloc 1" sur lequel des règles doivent s'appliquer. Comme on le verra par la suite, ceci n'est pas nécessaire.

Le message 4 arrive par l'intermédiaire de l'interface 3 et du bus 2 dans le microprocesseur 100.

Celui-ci, à partir de l'identification de la règle Règle 1 présente en zone 59, va rechercher selon l'invention, dans le fichier 12 quels sont les enregistrements qui ont Règle 1, en zone 33, comme identifiant. On peut aussi vérifier que les enregistrements trouvés sont conditionnés, en zone 51, par une condition d'accès par exemple PETROL. La condition d'accès peut être différente de PETROL si on a choisi pour l'application un mot de passe différent. Dans ce cas, ce mot de passe doit être contenu dans le message 4 (à moins de pouvoir être déduit par le microprocesseur 100 de l'identifiant de l'application elle-même). Le microprocesseur 100 ne prendra dans le fichier 12 que l'enregistrement 30 qui comporte à la fois la Règle 1 comme identification en zone 33 et le code PETROL en zone 51, dans les conditions d'accès. Ceci est représenté sur la figure 6.

En variante, si le message 4 comporte une zone 60 désignant le bloc compteur, Bloc 1, du fichier 6, le microprocesseur 100 cherchera l'enregistrement dont l'identifiant en zone 11 correspondra au "Bloc 1" désigné en zone 60. Dans ce cas, la désignation du bloc compteur peut engendrer, si la zone 59 est à blanc, l'application de toutes les règles applicables désignées dans la zone 11 de l'enregistrement 7.

Enfin, si seule la condition d'accès PETROL est donnée, le microprocesseur 100 retiendra tous les blocs compteurs et ou toutes les règles correspondant à cette condition d'accès.

En pratique, il est donc possible de mettre en oeuvre l'invention à partir de l'identification 55 de l'application seule, à partir de la désignation de la règle, zone 59 ou à partir de la désignation du bloc compteur, zone 60, ou à partir d'une quelconque combinaison de ces trois éléments.

Dans le cas montré sur la figure 6, en faisant abstraction pour l'instant de la version de la règle mémorisée dans le fichier 13, on voit apparaître cinq fiches d'instruction 61, 62, 63, 67 et 68 . Dans les trois premiers cas, le compteur, compteur 1, concerné sera le compteur enregistré en zone 26 du bloc compteur 7. Cela aurait pu être le compteur enregistré en zone 27 ou en zone 28, ou même un compteur enregistré dans un autre bloc. Soit la désignation en zone 36 est suffisante, soit elle est complétée par la zone 60 du message 4.

Le type d'instruction 37 dans chacun des trois premiers cas sera une addition de type 1. C'est un exemple. La valeur à additionner sera, pour chaque instruction, fonction des arguments donnés dans les deux zones suivantes 371 et 372. A titre d'exemple la figure 12 montre l'opération d'addition de type 1. Cette opération d'addition comporte, dans l'exemple, une micro-instruction 64 par laquelle on divise les données de la zone 56 du message 4 par n. La valeur n est le contenu de la zone 372. Dans l'exemple où la valeur de donnée valait 180, et où n vaut 50, la division de 130 par 50 donne 3 avec un reste de 30. A une micro-instruction 65 suivante, on prend en compte seulement la partie entière de la division. Le résultat est donc 3. A une micro-instruction suivante 66, on multiplie ce résultat intermédiaire 3, par la valeur m. La valeur m est la valeur stockée dans la zone 371 de l'enregistrement 61. Ici, m vaut 1. Donc le résultat à additionner vaut 3. En conséquence, l'application de l'instruction Addition 1 sur le compteur 1 consistera à lui additionner 3 points de plus.

Pour la fiche 62, les valeurs n et m valent maintenant respectivement 25 et 1. Compte tenu de la valeur de l'achat, inférieure à 200 Frs, cette règle ne produit pas de points gratification supplémentaire.

En effet, les deux fiches 61 et 62 sont conditionnées par des condition 1 et condition 2 respectivement indiquées en zone 373. Une fiche de règle comporte, en zone 373, un identifiant d'un enregistrement du fichier 13 de conditions qui va être utilisé. Pour la fiche 61, la condition 1 est représentée figure 7. L'opérande de composition des conditions entre elles est un ET logique. Quand il n'y a qu'une condition, l'opérande de composition est toujours un ET logique. On verra plus loin, figure 10, comment se composent les opérandes de composition logique des conditions. La fonction de la condition 1 est, dans le scénario évoqué, une comparaison avec une signification "inférieur ou égal". Le résultat de la comparaison est positif si la valeur désignée dans la zone 42, ici la donnée 180, est inférieure ou égale à la valeur désignée ou présentée dans la zone 41. La zone 41 est la zone de référence de la condition. Elle comporte ici la valeur 200. La zone 42 comporte la référence de la valeur à tester. Ici il s'agit des données entrées. Il s'agit des 180 Frs de l'achat. En pratique, l'information en zone 42 est l'adresse de l'endroit où est stockée la valeur de 180 Frs du message 4. Comme la condition 1 est réalisée, puisque 180 est inférieur à 200, l'exécution de la fiche 61 peut être menée à terme.

La figure 8 montre la condition 2 de l'application de la fiche 62 de la Règle 1. L'achat étant inférieur à 200 Frs, et la condition 2 étant que cet achat soit supérieur à 200 Frs, la condition n'est pas réalisée. Dans ce cas, la fiche d'instruction 62 n'est pas exécutée.

La fiche d'instruction 63 comporte une condition 3 montrée sur la figure 9. Cette condition 3 consiste à comparer le contenu du compteur de visite du Bloc 1, zone 28 de l'enregistrement 7, à la valeur 0 présente dans la zone 41. Au début, alors que le compteur de visite est nul, cette condition se réalise, une instruction 63 peut être exécutée. Cette instruction est une addition d'un type différent de l'addition présenté en figure 12. L'addition Addition 2 est une addition simple. Elle consiste à additionner le contenu de la zone 371 de l'enregistrement 63, ici il s'agit de la valeur 10, au compteur désigné en zone 26 du Bloc 1.

Selon les types d'opération Addition 1 ou Addition 2 désignés, les opérandes du calcul ou le résultat lui-même peuvent être mémorisés à divers endroits, voire dans l'instruction.

Ainsi à l'issue de ces trois opérations, le compteur 1 en zone 26, pour 180 Frs d'achat, comportera un résultat 13.

Dans une application encore plus complexe, il est possible que le fournisseur de carburant s'associe avec un autre prestataire de service, par exemple une chaîne de restauration rapide, ou bien une société de distribution de cinéma. Il est possible dans ces conditions que, pour tout achat effectué auprès du premier, le pétrolier, un certain nombre de points soient attribués dans un compteur du second, celui de la chaîne de restauration rapide par exemple. C'est ce que montre la fiche 67.

Dans ce cas, le compteur concerné sera un compteur différent du compteur indiqué en zone 26 de l'enregistrement 7. Cela pourra être le compteur principal de l'enregistrement 8. Il peut être décidé que cet autre compteur, le compteur 2 (fiche 67) subira une addition de type 1, Addition 1, avec un incrément de 1 (zone 371) pour chaque tranche dont la valeur est indiquée dans la zone 372 : 30 Frs. Dans ces conditions, les valeurs n et m de la figure 12 sont respectivement 30 et 1. Ceci signifie que pour chaque tranche de 30 Frs d'achat le compteur 2 reçoit un point. Pour la fiche 67, il n'y a pas de condition: elle est exécutée de toute façon.

La désignation du compteur, compteur 2, est ici contenue dans l'enregistrement de la règle, Règle 1. Il est possible néanmoins que le message, en zone 60, désigne le bloc compteur Bloc 1 et que l'enregistrement 7 relatif à ce bloc compteur renvoie en zone 11 à la règle Règle 1 qui elle ne fasse que compléter la désignation du compteur 26 (ou d'un autre).

De la même façon, la Règle 1 peut encore comporter dans une fiche 68 la désignation d'un compteur 3. Le compteur 3 reçoit le résultat d'une addition de type 2 (addition simple). Les arguments de l'addition de type 2 ne sont pas ici désignés définitivement. Ils résultent de l'application d'un calcul enregistré à une fiche d'un enregistrement du fichier calcul 14. Le calcul désigné dans l'enregistrement est le Calcul 1. Un enregistrement de calcul comportant "Calcul 1" comme identifiant en zone 43 est montré sur la figure 11.

Dans celle-ci, le type d'opération 45 mis en oeuvre, dans l'exemple, est une multiplication. Son premier opérande désigné en zone 46 est le contenu du compteur de visite du bloc compteur 1. Il s'agit en pratique de l'état de la zone 28. Le deuxième opérande de la multiplication désigné en zone 47, ici 2, peut être un chiffre fixe. Il pourrait tout aussi bien être un aléa. Dans l'exemple on a décidé, pour inciter les gens à revenir le plus souvent possible, de leur compter d'autant plus de points qu'ils sont venus souvent. Ce décompte peut être ainsi exponentiel. Par exemple, quelqu'un qui sera venu 25 fois, aura un compteur de visite 23 dans un état 25. Le résultat du calcul 1 sera alors 50. Comme la zone 48, l'opérateur de fiche comporte la désignation d'une addition, ceci signifie qu'il faudra additionner le résultat (50) du calcul de la fiche avec le calcul résultant de la fiche suivante. Comme il n'y a pas de fiche suivante, le résultat définitif du calcul sera 50. S'il y avait eu d'autres fiches dans l'enregistrement de la figure 11, celles-ci auraient été composés entre elles (multiplication, addition, exponentiation, ...) selon le sens de l'opérateur de fiche. Autrement dit, l'enregistrement 68 conduira à additionner la valeur 50 dans le compteur 3. Le compteur 3 est un compteur du bloc compteur de l'enregistrement 8. Il correspond à la chaîne de restauration rapide.

On aurait pu tout aussi bien additionner les 50 points dans le compteur 1. Il aurait fallu dans ce cas en zone 36 désigner le compteur 1.

La fiche d'instruction 68 est soumise à une condition, la condition 4. Celle-ci est montrée figure 10. Elle indique qu'en définitive ce type d'incrémentation ne pourra être possible que si la date du jour est comprise entre les dates prévues pour le début et la fin de l'opération d'octroi des points de gratification.

On voit avec la figure 10 qui montre la condition 4, comment peuvent coopérer entre eux les opérateurs de combinaison (de type ET, OU, ou OU Exclusif, ...) des conditions. Ici, il faut que les deux fiches de condition soient satisfaites puisque les opérateurs de combinaisons sont deux ET.

En ce qui concerne la fiche 68, en plus de la condition 4, on aurait pu soumettre par une addition de type 1 (Addition 1) le résultat (50) du calcul (Calcul 1) à une multiplication par un nombre de tranches de 100 Frs. Ceci permettrait d'éviter que les utilisateurs ne se livrent à des achats de valeur dérisoire. Dans ce cas, en zone 372 figurerait la valeur 100 (montrée ici entourée de tirets). Dans ce cas, l'application de l'instruction 68 conduirait à retenir pour n la valeur 100 et pour m la valeur 50, résultant de l'application du Calcul 1.

Les fonctions logiques 40 qui représentent les conditions du fichier 13 peuvent être les fonctions plus grand, plus grand ou égal, plus petit, plus petit ou égal, égal, différent, ou autre. Les fonctions 45 des opérations de calcul du fichier 14 peuvent être de préférence l'addition, la soustraction, la division, la multiplication, l'exponentiation, la production d'un nombre aléatoire ou autres.

Au moment où le message 4 parvient à la puce de la carte 1, l'identification de l'application PETROL peut être déclinée pour venir remplir les registres 15 à 18 conditionnant les conditions d'accès aux fichiers 6 et 12 à 14. Ces conditions d'accès peuvent bien entendu être utilisées chaque fois qu'on veut conditionner l'utilisation d'un fichier à la présence, dans un des registres correspondant 15 à 18, d'une information identique à celle figurant dans les enregistrements des fichiers 6 et 12 à 14.

Ces conditions d'accès peuvent par ailleurs aussi être utilisées pour permettre la modification des enregistrements des fichiers 6 et 12 à 14. Ainsi, la modification de l'enregistrement 7 pourra n'être entreprise qu'à condition que les conditions d'accès, en modification, renseignée en zone 20 de l'enregistrement 7 soient identiques aux données stockées dans le registre 16 (et qui ont été peu ou prou transmises par le message 4). Il en est de même pour les modifications des enregistrements des fichiers 12, 13 et 14 pour lesquels les contenus des zones 51, 52, 53 doivent être respectivement identiques au contenu des registres 16, 18 et 19.

Il n'est bien entendu pas nécessaire que la même identification de code secret soit enregistrée dans chacun des registres 16 à 19. En prévoyant des codes secrets différents on rend la gestion de cette architecture de fichiers plus souple et plus puissante. Il n'est bien entendu pas non plus nécessaire que la condition d'accès soit remplie pour pouvoir mettre en oeuvre les éléments d'un fichier: utilisation d'une condition, mise en oeuvre d'un calcul, etc.

sur le plan pratique, il est possible d'organiser l'information autrement que dans les quatre fichiers 6 et 12 à 14. Notamment les fichiers 12, 13 et 14 peuvent être concaténés, l'enregistrement de condition pouvant par exemple, être placé directement dans la zone 373. Ceci est possible notamment si les conditions d'accès et l'identifiant sont les mêmes.

La version de la règle permet au lecteur en relation avec la carte 1 de déterminer si une règle a été mise à jour ou s'il doit préalablement procéder à cette mise à jour avant l'exécution de la règle. Cette mise à jour est de type connu.

Ainsi, selon l'invention, pour rendre plus souple la gestion du compteur de gratifications d'une carte à puce, on décide d'enregistrer dans la mémoire de la carte à puce une architecture de fichiers permettant une gestion aisée de ses compteurs. Selon cette architecture, un fichier de règles, où sont situées les règles relatives à une application, est associé à des blocs compteurs. De ce fait, la simple désignation d'une règle implique la modification des compteurs de ce bloc compteur ou vice versa. Cette mise en oeuvre est interne à la puce de la carte à puce. Elle ne nécessite pas d'échange avec le lecteur.

## Revendications (Revendications pour l'(les) Etat(s) contractant(s) suivant(s): DE, FR, GB)

1. Carte à puce (1) munie dans sa puce d'un dispositif (5) de comptage comportant au moins un compteur modifiable à l'aide d'instructions de modification desdits compteurs, et d'un microprocesseur (100) agencé pour mettre en oeuvre les instructions de modification desdits compteurs, ledit dispositif (5) de comptage comportant un fichier (12) de règles dont chaque enregistrement (30, 31, 32) correspond à une règle et comporte au moins une fiche d'instruction comportant :
- une zone (36) de désignation pour identifier un compteur à mouvementer,
- une zone (37) d'instruction pour identifier l'instruction de modification du compteur à mouvementer,
- au moins une zone (371, 372) de variable pour contenir une variable sur laquelle s'applique l'instruction de modification du compteur à mouvementer.

2. Carte selon la revendication 1, **caractérisée en ce que** ladite au moins une fiche d'instruction, associant à l'instruction de modification du compteur à mouvementer une condition d'application de cette instruction, comporte une zone (373) référence de condition pour désigner un enregistrement d'un fichier (13) de conditions qui contient des conditions à satisfaire pour autoriser la réalisation de l'instruction de modification du compteur à mouvementer.

3. Carte selon l'une des revendications 1 ou 2, **caractérisée en ce que** le dispositif de comptage comporte un fichier (6) de blocs compteurs dont les enregistrements associent des identifications de compteurs (26, 28) à une ou des identifications de règles (11) applicables à ces compteurs.

4. Carte selon l'une des revendications 1 à 3, **caractérisée en ce que** le dispositif (5) de comptage comporte, pour autoriser l'exécution d'une instruction, un fichier (13) de conditions dont chaque enregistrement comporte au moins une fiche de conditions, chaque fiche de conditions comportant:
- une zone fonction (40) pour représenter une condition logique,
- au moins deux zones (41, 42) de variables pour contenir respectivement une valeur de référence de la condition et une valeur à tester par rapport à la valeur de référence selon la condition logique de la zone fonction,
- une zone opérateur (39) pour montrer comment composer les conditions logique des différentes fiches de conditions d'un enregistrement du fichier (13) de conditions.

5. Carte selon l'une des revendications 1 à 4, **caractérisée en ce que** le dispositif (5) de comptage comporte un fichier (14) de calculs dont chaque enregistrement comporte au moins une fiche de calculs (49, 50) comportant :
- une zone fonction (45) pour désigner une fonction mathématique élémentaire,
- au moins une zone (46, 47) de variable pour contenir un opérande de cette fonction mathématique élémentaire,
- et une zone opérateur (48) pour indiquer la manière dont le résultat d'une fiche de calculs (49) doit être pris en compte pour un calcul avec une fiche suivante (50) de l'enregistrement.

6. Carte selon l'une des revendications 3 à 5 **caractérisée en ce que** les enregistrements des fichiers de blocs compteurs, des règles, des conditions ou des calculs comportent une zone (20, 51, 53) condition d'accès pour autoriser l'utilisation ou la modification.

7. Carte selon l'une des revendications 1 à 6, **caractérisée en ce que** les enregistrements (30, 31, 32) du fichier de règles comportent une zone version (54) pour en indiquer le caractère récent.

8. Procédé de comptage dans une carte à puce comportant un microprocesseur, procédé dans lequel
- on transmet à la carte à puce une identification d'une règle,
- le microprocesseur de la carte à puce extrait un enregistrement d'un fichier de règles qui correspond à la règle identifiée, et
- modifie des compteurs de la carte à puce désignés par cet enregistrement selon des instructions associées dans cet enregistrement à ces compteurs désignés.

## Revendications (Revendications pour l'(les) Etat(s) contractant(s) suivant(s): AT, BE, CH, DK, ES, FI, GR, IE, IT, LI, LU, MC, NL, PT, SE)

1. Carte à puce (1) munie dans sa puce d'un dispositif (5) de comptage comportant au moins un compteur modifiable à l'aide d'instructions de modification desdits compteurs, **caractérisé en ce que** ledit dispositif (5) de comptage comporte un fichier (12) de règles dont chaque enregistrement (30, 31, 32) correspond à une règle et comporte au moins une fiche d'instruction comportant :
- une zone (36) de désignation pour identifier un compteur à mouvementer,
- une zone (37) d'instruction pour identifier l'instruction de modification du compteur à mouvementer,
- au moins une zone (371, 372) de variable pour contenir une variable sur laquelle s'applique l'instruction de modification du compteur à mouvementer.

2. Carte selon la revendication 1, **caractérisée en ce que** ladite au moins une fiche d'instruction, associant à l'instruction de modification du compteur à mouvementer une condition d'application de cette instruction, comporte une zone (373) référence de condition pour désigner un enregistrement d'un fichier (13) de conditions qui contient des conditions à satisfaire pour autoriser la réalisation de l'instruction (37) de modification du compteur à mouvementer.

3. Carte selon l'une des revendications 1 ou 2, **caractérisée en ce que** le dispositif de comptage comporte un fichier (6) de blocs compteurs dont les enregistrements associent des identifications de compteurs (26, 28) à une ou des identifications de règles (11) applicables à ces compteurs.

4. Carte selon l'une des revendications 1 à 3, **caractérisée en ce que** le dispositif (5) de comptage comporte, pour autoriser l'exécution d'une instruction, un fichier (13) de conditions dont chaque enregistrement comporte au moins une fiche de conditions, chaque fiche de conditions comportant:
- une zone fonction (40) pour représenter une condition logique,
- au moins deux zones (41, 42) de variables pour contenir respectivement une valeur de référence de la condition et une valeur à tester par rapport à la valeur de référence selon la condition logique de la zone fonction,
- une zone opérateur (39) pour montrer comment composer les conditions logiques des différentes fiches de conditions d'un enregistrement du fichier (13) de conditions.

5. Carte selon l'une des revendications 1 à 4, **caractérisée en ce que** le dispositif (5) de comptage comporte un fichier (14) de calculs dont chaque enregistrement comporte au moins une fiche de calculs (49, 50) comportant :
- une zone fonction (45) pour désigner une fonction mathématique élémentaire,
- au moins une zone (46, 47) de variable pour contenir un opérande de cette fonction mathématique élémentaire,
- et une zone opérateur (48) pour indiquer la manière dont le résultat d'une fiche de calculs (49) doit être pris en compte pour un calcul avec une fiche suivante (50) de l'enregistrement.

6. Carte selon l'une des revendications 1 à 5, **caractérisée en ce que** la puce de la carte comporte une mémoire (5) pour mémoriser les enregistrements et un microprocesseur (100) pour mettre ces règles en oeuvre en modifiant les compteurs.

7. Carte selon l'une des revendications 3 à 6 **caractérisée en ce que** les enregistrements des fichiers de blocs compteurs, des règles, des conditions ou des calculs comportent une zone (20, 51, 53) condition d'accès pour autoriser l'utilisation ou la modification.

8. Carte selon l'une des revendications 1 à 7, **caractérisée en ce que** les enregistrements (30, 31, 32) du fichier de règles comportent une zone version (54) pour en indiquer le caractère récent.

9. Procédé de comptage dans une carte à puce **caractérisé en ce que** :
- on transmet à la carte à puce une identification d'une règle,
- dans la carte à puce on extrait un enregistrement d'un fichier de règles qui correspond à la règle identifiée, et
- on modifie des compteurs de la carte à puce désignés par cet enregistrement selon des instructions associées dans cet enregistrement à ces compteurs désignés.

10. Procédé selon la revendication 9 **caractérisé en ce que** la modification des compteurs est mise en oeuvre par un microprocesseur de la carte à puce.

## Patentansprüche (Patentansprüche für folgende(n) Vertragsstaat(en): DE, FR, GB)

1. Chipkarte (1) ausgestattet in ihrem Chip mit einer Zählvorrichtung (5) mit mindestens einem mit Hilfe von Änderungsbefehlen der besagten Zähler änderbaren Zähler und einem Mikroprozessor (100) für die Umsetzung der Änderungsbefehle der besagten Zähler, wobei die besagte Zählvorrichtung (5) eine Regeldatei (12) umfasst, deren jede Eintragung (30, 31, 32) einer Regel entspricht und mindestens ein Befehlsblatt umfasst mit:
- einem Benennungsfeld (36), um einen zu bewegenden Zähler zu identifizieren,
- einem Befehlsfeld (37), um den Änderungsbefehl des zu bewegenden Zählers zu identifizieren,
- mindestens einen Variablenfeld (371, 372), um eine Variable zu enthalten, auf die der Änderungsbefehl des zu bewegenden Zählers angewendet wird.

2. Karte gemäß Anspruch 1, **dadurch gekennzeichnet, dass** das besagte mindestens eine Befehlsblatt, das dem Änderungsbefehl des zu bewegenden Zählers eine Applikationsbedingung dieses Befehls zuordnet, ein Referenzbedingungsfeld (373) umfasst, um eine Eintragung einer Bedingungsdatei (13) zu benennen, die zu erfüllende Bedingungen enthält, um die Realisation des Änderungsbefehls des zu bewegenden Zählers zu genehmigen.

3. Karte gemäß einem der Ansprüche 1 oder 2, **dadurch gekennzeichnet, dass** die Zählvorrichtung eine Zählblockdatei (6) umfasst, deren Eintragungen einer oder mehrerer auf diese Zähler anwendbarer Regelidentifizierungen (11) Zähleridentifikationen (26, 28) zuordnet.

4. Karte nach einem der Ansprüche 1 bis 3, **dadurch gekennzeichnet, dass** die Zählvorrichtung (5), zur Genehmigung der Ausführung eines Befehls, eine Bedingungsdatei (13) umfasst, deren jede Eintragung mindestens ein Informationsblatt aufweist, wobei jedes Bedingungsblatt umfasst:
- ein Funktionsfeld (40), um eine logische Bedingung darzustellen,
- mindestens zwei Variablenfelder (41, 42), um jeweils einen Referenzwert der Bedingung und einen in Bezug auf den Referenzwert zu testenden Wert gemäß der logischen Bedingung des Funktionsfelds zu enthalten,
- ein Operatorfeld (39), um zu zeigen, wie die logischen Bedingungen der einzelnen Bedingungsblätter einer Eintragung der Bedingungsdatei (13) zusammengesetzt werden.

5. Karte gemäß einem der Ansprüche 1 bis 4, **dadurch gekennzeichnet**, das die Zählvorrichtung eine Berechnungsdatei (14) umfasst, deren jede Aufzeichnung mindestens ein Berechnungsblatt (49, 50) aufweist, mit
- einem Funktionsfeld (45), um eine elementare mathematische Funktion zu benennen.
- mindestens einem Variablenfeld (46, 47), um einen Operanden dieser elementaren mathematischen Funktion zu enthalten,
- und ein Operatorfeld (48), um die Art und Weise anzuzeigen, auf die das Ergebnis eines Berechnungsblatts (49) für eine Berechnung mit einem nächsten Blatt (50) der Eintragung zu berücksichtigen ist.

6. Karte gemäß einem der Ansprüche 3 bis 5, **dadurch gekennzeichnet, dass** die Eintragungen der Dateien der Zählblöcke, der Regeln, der Bedingungen oder der Berechnungen ein Zugriffsbedingungsfeld (20, 51, 53) umfassen, um die Benutzung oder Änderung zu genehmigen.

7. Karte gemäß einem der Ansprüche 1 bis 6, **dadurch gekennzeichnet, dass** die Eintragungen (30, 31, 32) der Regeldatei ein Versionsfeld (54) umfassen, um dort den letzten Charakter anzuzeigen.

8. Zählverfahren in einer einen Mikroprozessor enthaltenden Chipkarte, Verfahren bei dem
- man eine Identifikation einer Regel auf die Chipkarte überträgt,
- der Mikroprozessor der Chipkarte eine Eintragung aus einer Regeldatei ausliest, die der identifizierten Regel entspricht, und
- die von dieser Eintragung benannten Zähler der Chipkarte gemäß den Befehlen ändert, die in dieser Eintragung diesen benannten Zählern zugeordnet sind.

## Patentansprüche (Patentansprüche für folgende(n) Vertragsstaat(en): AT, BE, CH, DK, ES, FI, GR, IE, IT, LI, LU, MC, NL, PT, SE)

1. Chipkarte (1) ausgestattet in ihrem Chip mit einer Zählvorrichtung (5) mit mindestens einem mit Hilfe von Änderungsbefehlen der besagten Zähler änderbaren Zähler, **dadurch gekennzeichnet, dass** die besagte Zählvorrichtung eine Regeldatei (12) umfasst, deren jede Eintragung (30, 31, 32) einer Regel entspricht und mindestens ein Befehlsblatt umfasst mit:
- einem Benennungsfeld (36), um einen zu bewegenden Zähler zu identifizieren,
- einem Befehlsfeld (37), um den Änderungsbefehl des zu bewegenden Zählers zu identifizieren,
- mindestens einen Variablenfeld (371, 372), um eine Variable zu enthalten, auf die der Änderungsbefehl des zu bewegenden Zählers angewendet wird.

2. Karte gemäß Anspruch 1, **dadurch gekennzeichnet, dass** das besagte mindestens eine Befehlsblatt, das dem Änderungsbefehl des zu bewegenden Zählers eine Applikationsbedingung dieses Befehls zuordnet, ein Referenzbedingungsfeld (373) umfasst, um eine Eintragung einer Bedingungsdatei (13) zu benennen, die zu erfüllende Bedingungen enthält, um die Realisation des Änderungsbefehls des zu bewegenden Zählers zu genehmigen.

3. Karte gemäß einem der Ansprüche 1 oder 2, **dadurch gekennzeichnet, dass** die Zählvorrichtung eine Zählblockdatei (6) umfasst, deren Eintragungen einer oder mehrerer auf diese Zähler anwendbarer Regelidentifizierungen (11) Zähleridentifikationen (26, 28) zuordnet.

4. Karte nach einem der Ansprüche 1 bis 3, **dadurch gekennzeichnet, dass** die Zählvorrichtung (5), zur Genehmigung der Ausführung eines Befehls, eine Bedingungsdatei (13) umfasst, deren jede Eintragung mindestens ein Informationsblatt aufweist, wobei jedes Bedingungsblatt umfasst:
- ein Funktionsfeld (40), um eine logische Bedingung darzustellen,
- mindestens zwei Variablenfelder (41, 42), um jeweils einen Referenzwert der Bedingung und einen in Bezug auf den Referenzwert zu testenden Wert gemäß der logischen Bedingung des Funktionsfelds zu enthalten,
- ein Operatorfeld (39), um zu zeigen, wie die logischen Bedingungen der einzelnen Bedingungsblätter einer Eintragung der Bedingungsdatei (13) zusammengesetzt werden.

5. Karte gemäß einem der Ansprüche 1 bis 4, **dadurch gekennzeichnet**, das die Zählvorrichtung eine Berechnungsdatei (14) umfasst, deren jede Aufzeichnung mindestens ein Berechnungsblatt (49, 50) aufweist, mit
- einem Funktionsfeld (45), um eine elementare mathematische Funktion zu benennen.
- mindestens einem Variablenfeld (46, 47), um einen Operanden dieser elementaren mathematischen Funktion zu enthalten,
- und ein Operatorfeld (48), um die Art und Weise anzuzeigen, auf die das Ergebnis eines Berechnungsblatts (49) für eine Berechnung mit einem nächsten Blatt (50) der Eintragung zu berücksichtigen ist.

6. Karte gemäß einem der Ansprüche 1 bis 5, **dadurch gekennzeichnet, dass** der Chip der Karte einen Speicher (5) umfasst, um die Eintragungen zu speichern, und einen Mikroprozessor (100), um diese Regeln durch Änderung der Zähler umzusetzen.

7. Karte gemäß einem der Ansprüche 3 bis 5, **dadurch gekennzeichnet, dass** die Eintragungen der Dateien der Zählblöcke, der Regeln, der Bedingungen oder der Berechnungen ein Zugriffsbedingungsfeld (20, 51, 53) umfassen, um die Benutzung oder Änderung zu genehmigen.

8. Karte gemäß einem der Ansprüche 1 bis 7, **dadurch gekennzeichnet, dass** die Eintragungen (30, 31, 32) der Regeldatei ein Versionsfeld (54) umfassen, um dort den letzten Charakter anzuzeigen.

9. Zählverfahren in einer Chipkarte, **dadurch gekennzeichnet, dass** man
- eine Identifikation einer Regel auf die Chipkarte überträgt,
- aus der Chipkarte eine Eintragung aus einer Regeldatei ausliest, die der identifizierten Regel entspricht, und
- die von dieser Eintragung benannten Zähler der Chipkarte gemäß den Befehlen ändert, die in dieser Eintragung diesen benannten Zählern zugeordnet sind.

10. Verfahren gemäß Anspruch 9, **dadurch gekennzeichnet, dass** die Änderung der Zähler von einem Mikroprozessor der Chipkarte umgesetzt wird.

## Claims (Claims for the following Contracting State(s): DE, FR, GB)

1. A chip card (1) provided in its chip with a counting device (5) comprising at least one counter that can be modified with the help of instructions for modifying the said counters, and one microprocessor (100) arranged so as to execute the instructions for modifying the said counters, the said counting device (5) comprising a file (12) of rules, each record (30, 31, 32) of which corresponds to a rule and comprises at least one instruction sheet comprising:
- a designation area (36) for identifying a counter to be activated,
- an instruction area (37) for identifying the instruction for modifying the counter to be activated,
- at least one variable area (371, 372) that contains a variable to which the instruction to modify the counter to be activated is applied.

2. A card according to claim 1, **characterised in that** the said at least one instruction sheet associating the instruction to modify the counter to be activated with a condition for applying this instruction, comprises a condition reference area (373) for designating a record of a conditions file (13) that contains the conditions to be fulfilled for authorising the execution of the instruction to modify the counter to be activated.

3. A card according to either one of the claims 1 or 2, **characterised in that** the counting device comprises a file (6) of counter blocks in which the records associate counter identifications (26, 28) with one or more identifications of rules (11) that are applicable to these counters.

4. A card according to any one of the claims from 1 to 3, **characterised in that** the counting device (5) comprises, so as to authorise the execution of an instruction, a conditions file (13) in which each record comprises at least one sheet of conditions, each sheet of conditions comprising:
- a function area (40) to represent a logical condition,
- at least two areas (41, 42) of variables to respectively contain a reference value of the condition and a value to be tested in relation to the reference value according to the logical condition of the function area,
- an operator area (39) to show how to compose the logical conditions of the various sheets of conditions in a record of the conditions file (13).

5. A card according to any one of the claims from 1 to 4, **characterised in that** the counting device (5) comprises a calculation file (14) in which each record comprises at least one calculation sheet (49, 50) comprising:
- a function area (45) to designate an elementary mathematical function,
- at least one area (46, 47) of variables to contain an operand of this elementary mathematical function,
- and an operator area (48) to show how the result of a calculation sheet (49) must be taken into account for a calculation with the next sheet (50) in the record.

6. A card according to any one of the claims from 3 to 5, **characterised in that** the records of the files of counter blocks, rules, conditions or calculations comprise an access condition area (20, 51, 53) to authorise their use or modification.

7. A card according to any one of the claims from 1 to 6, **characterised in that** the records (30, 31, 32) of the file of rules, comprise a version area (54) to indicate the recent nature of the file.

8. A counting method in a chip card comprising a microprocessor, in which:
- an identification of a rule is sent to the chip card,
- the microprocessor of the chip card extracts a record from a file of rules that corresponds to the identified rule, and
- it modifies the counters of the chip card designated by this record according to instructions associated in this record with these designated counters.

## Claims (Claims for the following Contracting State(s): AT, BE, CH, DK, ES, FI, IE, IT, LI, LU, MC, NL, PT, SE)

1. A chip card (1) provided in its chip with a counting device (5) comprising at least one counter that can be modified with the help of instructions for modifying the said counters, **characterised in that** the said counting device (5) comprises a file (12) of rules, each record (30, 31, 32) of which corresponds to a rule and comprises at least one instruction sheet comprising:
- a designation area (36) for identifying a counter to be activated,
- an instruction area (37) for identifying the instruction for modifying the counter to be activated,
- at least one variable area (371, 372) that contains a variable to which the instruction to modify the counter to be activated is applied.

2. A card according to claim 1, **characterised in that** the said at least one instruction sheet associating the instruction to modify the counter to be activated with a condition for applying this instruction, comprises a condition reference area (373) for designating a record of a conditions file (13) that contains the conditions to be fulfilled for authorising the execution of the instruction to modify the counter to be activated.

3. A card according to either one of the claims 1 or 2, **characterised in that** the counting device comprises a file (6) of counter blocks in which the records associate counter identifications (26, 28) with one or more identifications of rules (11) that are applicable to these counters.

4. A card according to any one of the claims from 1 to 3, **characterised in that** the counting device (5) comprises, so as to authorise the execution of an instruction, a conditions file (13) in which each record comprises at least one sheet of conditions, each sheet of conditions comprising:
- a function area (40) to represent a logical condition,
- at least two areas (41, 42) of variables to respectively contain a reference value of the condition and a value to be tested in relation to the reference value according to the logical condition of the function area,
- an operator area (39) to show how to compose the logical conditions of the various sheets of conditions in a record of the conditions file (13).

5. A card according to any one of the claims from 1 to 4, **characterised in that** the counting device (5) comprises a calculation file (14) in which each record comprises at least one calculation sheet (49, 50) comprising:
- a function area (45) to designate an elementary mathematical function,
- at least one area (46, 47) of variables to contain an operand of this elementary mathematical function,
- and an operator area (48) to show how the result of a calculation sheet (49) must be taken into account for a calculation with the next sheet (50) in the record.

6. A card according to any one of the claims from 1 to 5, **characterised in that** the chip of the card comprises a memory (5) for memorising the records and a microprocessor (100) for executing the instructions and modifying the counters.

7. A card according to any one of the claims from 3 to 6, **characterised in that** the records of the files of counter blocks, rules, conditions or calculations comprise an access condition area (20, 51, 53) to authorise their use or modification.

8. A card according to any one of the claims from 1 to 7, **characterised in that** the records (30, 31, 32) of the file of rules, comprise a version area (54) to indicate the recent nature of the file.

9. A counting method in a chip card, **characterised in that**:
- an identification of a rule is sent to the chip card,
- a record from a file of rules that corresponds to the identified rule is extracted from the chip card, and
- the counters of the chip card designated by this record according to instructions associated in this record with these designated counters are modified.

10. A method according to claim 9, **characterised in that** the modification of the counters is executed by a microprocessor of the chip card.
